# EUROPÄISCHE PATENTANMELDUNG

(11) **EP 0 939 572 A2**
(43) Veröffentlichungstag der Anmeldung: **01.09.1999**
(21) Anmeldenummer: 98115720.9
(22) Anmeldetag: 20.08.1998
(51) Int. Cl.: H04Q 11/04

(54) **Verfahren und Einrichtung zum Vermitteln von rahmenorientierten seriellen Daten**

(30) Priorität: 27.02.1998 DE 19808495; 27.02.1998 DE 19808498
(71) Anmelder: SIEMENS AKTIENGESELLSCHAFT, 80333 München (DE)
(72) Erfinder: Mai, Henning, 83607 Holzkirchen (DE); Spennemann, Peter, 82024 Taufkirchen (DE); Michels, Bernard, 85221 Dachau (DE)

(57) **Zusammenfassung**

Es wird ein Verfahren und eine Einrichtung zum Vermitteln von rahmenorientierten seriellen Daten, z.B. PCM-Daten, angegeben. Mit Hilfe eines Vermittlungsalgorithmus werden Vermittlungs-Informationen erzeugt, die bitweise auf die Daten bezogen sind und Adressen von Ausgangsleitungen einer Schnittstelle der Einrichtung umfassen. Durch die bitweise Vermittlung können Daten von Kanälen mit weitgehend beliebiger Bandbreite ohne mehrfachen Durchlauf durch die Vermittlungseinrichtung vermittelt werden. Durch einen Bypass-Datenpfad ist es ohne weiteres möglich, das letzte Bit eines eingehenden PCM-Rahmens auf das erste Bit des nächsten PCM-Rahmens zu vermitteln. Jedes beliebige Bit eines Eingangsrahmens kann somit mit einer festen Verzögerung von einem PCM-Rahmen (125 µsec) vermittelt werden. Die Einrichtung ist vorteilhafterweise als anwendungsspezifischer Schaltkreis ausgebildet.

## Beschreibung

Die Erfindung betrifft ein Verfahren und eine Einrichtung zum Vermitteln von rahmenorientierten seriellen Daten, insbesondere von PCM-Daten in Kommunikationssystemen.

In GSM-Mobilfunksystemen ergibt sich in den verschiedenen Systemkomponenten bei der Vermittlung von Sprache und Daten das Problem, daß 8 kbit/s-Kanäle (1 Bit pro PCM-Rahmen und Vielfache davon) vermittelt bzw. geschaltet werden müssen. So hat beispielsweise ein Halfrate-Kanal eine Bandbreite von 8 kbit/s im GSM-Mobilfunksystemen auf der Schnittstelle Asub zwischen dem Basisstationcontroller BSC und der Transkodiereinheit TRAU und auf der Schnittstelle Abis zwischen der Basisstation BTS und der Transkodiereinheit TRAU, während ein Fullrate-Kanal eine Bandbreite von 16 kbit/s hat. Eine Vermittlung soll nach Möglichkeit blockierungsfrei, wahlfrei und mit einer festen garantierten Verzögerung von einem PCM-Rahmen (125 µsec) erfolgen. Ähnliche Problemstellungen ergeben sich auch bei anderen Kommunikationssystemen.

Um ein derartiges Vermitteln durchführen zu können, muß bisher, beispielsweise beim Verarbeiten von 16 kbit/s-Kanälen, ein PCM-Rahmen mit einer Datenrate von 2 MBit/s auf einem PCM-Rahmen von 8 MBit/s abgebildet werden, wobei die Information viermal zur Vermittlungseinrichtung übertragen wird, dort auf 64 kbit/s-Basis vermittelt und nach dem Vermitteln die Informationen wieder auf 2 MBit/s abgebildet werden. Dafür ist ein hoher schaltungstechnischer Aufwand erforderlich, der zu entsprechend hohen Kosten führt. Eine solche Aufgabe kann mit Standardbausteinen nur begrenzt gelöst werden. Die Lösung mit Standardbausteinen hat einen hohen Platzbedarf, der mit der Anzahl der Kanäle überproportional ansteigt. Bisherige Schaltkreise gewährleisten dabei nicht, daß alle Bits eines Eingangsrahmens zusammen im nächsten Ausgangsrahmen vermittelt werden. Insbesondere das Vermitteln des letzten Bits eines Eingangsrahmens auf das erste Bit des nächsten Ausgangsrahmens stellt sehr hohe Anforderungen. Diese Vermittlungsmöglichkeit ist jedoch wünschenswert, wenn man Kanäle beliebiger Bandbreite (n x 8 kbit/s) vermittelt (beispielsweise den H11-Kanal im ISDN mit 1536 kbit/s), ohne die Informationen eines Kanals auseinanderzureißen.

Gegenüber dem Stand der Technik liegt der Erfindung die Aufgabe zugrunde, ein Verfahren und einen Baustein zum Vermitteln von PCM-Daten bereitzustellen, um Kanäle mit weitgehend beliebiger Bandbreite (n x 8 kbit/s) und einem hohen Datendurchsatz bei vorgegebener Taktfrequenz zu vermitteln.

Ein Verfahren und eine Einrichtung zum Vermitteln von rahmenorientierten seriellen Daten zur Lösung dieser Aufgabe sind in den Patentansprüchen 1 bzw. 15 charakterisiert. Durch die bitweise Vermittlung können Daten von Kanälen mit weitgehend beliebiger Bandbreite ohne mehrfachen Durchlauf durch die Vermittlungseinrichtung vermittelt werden. Vorteilhafte Ausgestaltungen des erfindungsgemäßen Verfahrens bzw. der Einrichtung sind in abhängigen Ansprüchen charakterisiert. Die Einrichtung ist vorteilhafterweise als anwendungsspezifischer Schaltkreis ausgebildet.

Durch einen Bypass-Datenpfad ist es ohne weiteres möglich, das letzte Bit eines eingehenden PCM-Rahmens auf das erste Bit des nächsten PCM-Datenrahmens zu vermitteln. Jedes beliebige Bit eines Eingangsrahmens kann somit mit einer festen Verzögerung von einem PCM-Rahmen (125 µsec) vermittelt werden. Durch das parallele, jedoch weiterhin bitweise Vermitteln mehrerer Bits kann die Datenrate erhöht werden. Der Parallelbetrieb der Datenverarbeitung nach einer vorteilhaften Ausgestaltung der Erfindung sorgt dafür, daß ein hoher Datendurchsatz von 2, 4 bzw. 8 Mbit/s erreicht wird.

Nach der Erfindung wird eine nichtblockierende Vermittlung für bis zu 4096 x 8 kbit/s-Kanäle (32 MBit/s maximaler Durchsatz bei 16.384 MHz) erreicht, weil bitweise vermittelt wird, so daß es sich um einen echten Bit-Switch handelt. Desweiteren ist jedes beliebige Vielfache von 8 kbit/s (n x 8 kbit/s; n=1, ..., 1024) in jeder beliebigen Kombination als Kanal möglich.

Eine vorteilhafte Ausgestaltung des erfindungsgemäßen Verfahrens zeigt, wie die Vermittlungs-Information in dem Vermittlungs-RAM verteilt wird. Die Daten werden bereits beim Einschreiben in den Vermittlungs-RAM so verteilt, daß beim anschließenden Auslesen der jeweils gleichen physikalischen Adressen von 4 RAMs die benötigte Vermittlungs-Informationen in der richtigen Reihenfolge ausgegeben werden.

Nach einer weiteren vorteilhaften Ausgestaltung der Erfindung ist ein Verfahren angegeben, für das speziell im Mobilfunkbereich (insbesondere für Halfrate-Anwendungen) und anderen Bereichen, die nicht mit Vielfachen von 64 kbit/s arbeiten, eine Nachfrage besteht. Jede PCM-Eingangs- und Ausgangsleitung ist völlig frei auf 2 oder 4 oder 8 MBit/s konfigurierbar, so daß eine Leitung physikalisch ausgeschaltet werden kann bzw. nicht vorhanden sein braucht oder mit drei verschiedenen Datenraten betrieben werden kann. Dieser Freiheitsgrad ist ein wesentlicher Vorteil dieses Ausführungsbeispiels der als BISON (bit switch for optimized network architecctures) bezeichneten Einrichtung zur Vermittlung der Daten gegenüber herkömmlichen Schaltkreisen. Der BISON-Baustein ist ein programmierbarer PCM-Vermittlungs-Baustein, der - wie im Ausführungsbeispiel gezeigt - alle Funktionen aufweist, um den gewünschten Informationsfluss so einfach wie möglich zu verwirklichen.

Nach weiteren vorteilhaften Ausgestaltungen der Erfindung kann der Durchsatz und/oder die Zahl der Eingangs- bzw. Ausgangsleitungen erhöht werden. Mit anderen Worten können mehrere BISON-Bausteine kaskadierbar zu einer Vermittlungs-Matrix beliebiger Grösse zusammengefaßt werden, wobei die Ausgänge auf Bit-Basis in den Tristate-Zustand gebracht werden können. Mit dem BISON-Baustein lassen sich daher Vermittlungs-Matrizen beliebiger Grösse und für Kanäle verschiedener Bandbreite wesentlich kostengünstiger aufbauen als bisher. Ferner können die Vermittlungs-Matrizen wesentlich platzsparender als bisher aufgebaut werden.

Ausführungsbeispiele der Erfindung werden nun anhand der beiliegenden Zeichnungen beschrieben.

Es zeigen:
- Figur 1: ein Blockdiagramm, welches die Lage des BISON-Bausteins in einem Datenübertragungsnetzwerk zeigt;
- Figur 2: ein Blockdiagramm, welches den Aufbau des BISON-Bausteins darstellt;
- Figur 3: ein Blockschaltbild, welches den Aufbau des zentralen Controllers zeigt;
- Figur 4: eine schematische Darstellung der Speicherstruktur in dem Eingangs-RAM;
- Figur 5: eine schematische Darstellung des Vermittlungs-RAM ;
- Figur 6: eine schematische Darstellung der Vermittlungs-Einheit;
- Figur 7: die Struktur eines PCM-Rahmens in der PCM-Schnittstelle;
- Figur 8: ein Beispiel für einen Durchsatz von 32 Mbit/s bei 16.384 MHz;
- Figur 9: ein Beispiel für einen Durchsatz von 64 Mbit/s bei 32.768 MHz;
- Figur 10: ein Beispiel für einen Vermittlungs-Algorithmus für eine Datenübertragung bei 2, 4 oder 8 Mbit/s;
- Figur 11: ein Beispiel für eine Adressen-Abbildung bei 32 Mbit/s und 16.384 MHz;
- Figuren 12A und 12B: ein Beispiel für eine Adressen- Abbildung bei 64 Mbit/s und 32768 MHz;
- Figur 13: Beispiele von Adressen für Datenraten von 2 beziehungsweise 4 beziehungsweise 8 Mbit/s;
- Figuren 14A und 14B: die Darstellung des Datenflusses bei einem Bypass-Modus;
- Figur 15: einen virtuellen BISON-Baustein mit vier einzelnen BISON-Bausteinen;
- Figur 16: einen virtuellen BISON-Baustein mit zwei einzelnen BISON-Bausteinen unter Verdopplung des Durchsatzes; und
- Figur 17: einen virtuellen BISON-Baustein mit zwei einzelnen BISON-Bausteinen, wobei die Zahl der Eingänge/Ausgänge auf 32 verdoppelt ist.

Die im folgenden beschriebenen Ausführungsbeispiele beziehen sich auf die Anwendung im GSM-System, andere Anwendungen liegen jedoch ebenso im Rahmen der Erfindung. Bei dem GSM-System müssen PCM-Daten, die rahmenorientiert und seriell übertragen werden, verteilt werden. Die Daten sind logisch in Kanälen vorhanden und sollen physikalisch auf PCM-Leitungen abgebildet werden. Die Datenraten liegen im Bereich von 8 kBit/s bis 64 kBit/s und mehr. Der BISON-Baustein ist ein programmierbarer PCM-Vermittlungsschaltkreis, der alle Funktionen bietet, um den gewünschten Informationsfluss zu verwirklichen.

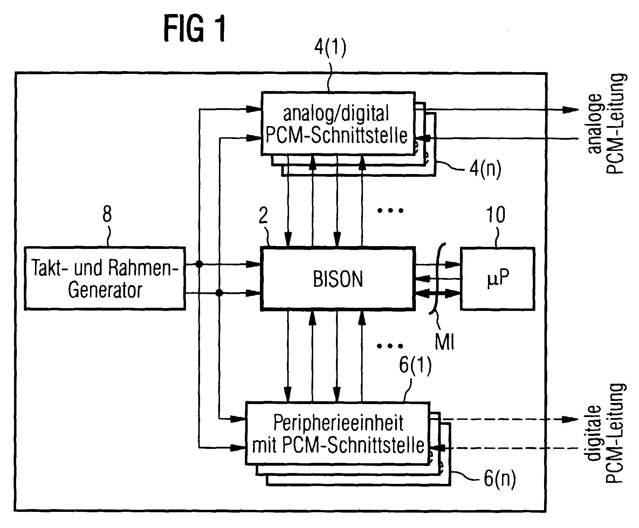

In einer Basisstation des GSM-Systems vermittelt der BISON-Baustein PCM-Daten von einem analogen Schnittstellen-Controller zu einer internen Peripherieeinheit mit einer PCM-Schnittstelle 4(1) bis 4(n) oder einem anderen analogen PCM-Schnittstellen-Controller. Wie in Figur 1 dargestellt ist, tauscht der BISON-Baustein 2 Daten mit Analog/Digital-PCM-Schnittstellen 4(1) bis 4(n) sowie mit Peripherieeinheiten 6(1) bis 6(n) mit PCM-Schnittstellen aus. Die Kommunikation mit den internen PCM-Leitungen von und zu dem BISON-Baustein 2 wird durch ein gemeinsames PCM-Takt- und Rahmensignal synchronisiert, welches von einem Takt- und Rahmengenerator 8 erzeugt wird. Schließlich steht der BISON-Baustein 2 noch über eine Mikroprozessorschnittstelle MI mit einem Mikroprozessor 10 in Verbindung, über den die Konfiguration des BISON-Bausteines 2 entsprechend des Profils des Kanals vorgenommen wird.

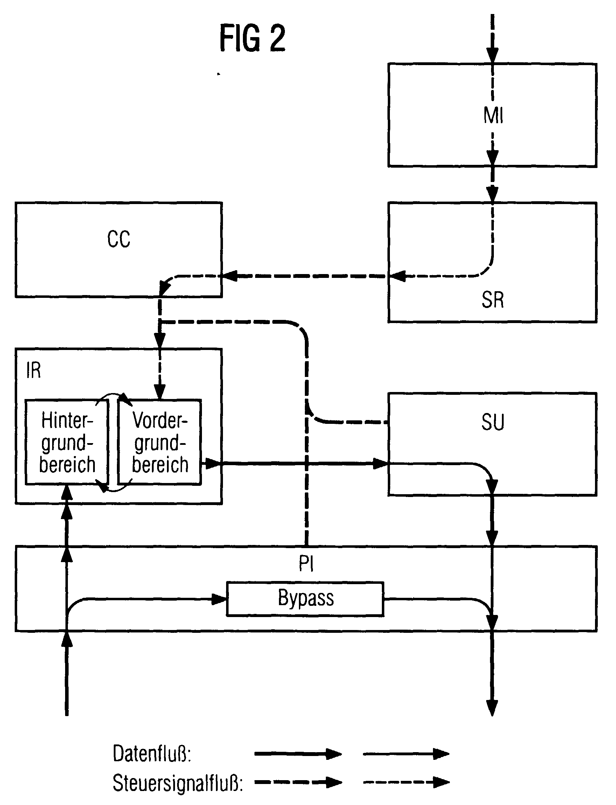

Figur 2 zeigt ein Blockdiagramm eines BISON-Bausteines mit einer Mikroprozessorschnittstelle MI, einem zentralen Controller CC, einem Vermittlungs-RAM SR, einer Vermittlungs-Einheit SU, einem Eingangs-RAM IR und einer PCM-Schnittstelle PI.

Der Datenfluss stellt sich wie folgt dar. PCM-Eingangsdaten werden in der PCM-Schnittstelle PI eingelesen und in den Hintergrundbereich des Eingangs-RAMs IR geschrieben. Während dieser Zeit werden Daten aus dem Vordergrundbereich des Eingangs-RAMs IR an die Vermittlungs-Einheit SU als neue Daten übergeben. Die Adressen, mit der der Eingangs-RAM IR in den Vordergrundbereich ausgelesen wird, werden von dem zentralen Controller CC übermittelt. Die Vermittlungs-Einheit SU wählt ein Bit aus den gelesenen Daten aus, speichert dieses Bit in einem Register ab und übermittelt die ausgewählten Bits an die PCM-Schnittstelle PI, wenn das Register gefüllt ist. Die PCM-Schnittstelle PI verteilt die Daten von dem Register auf die PCM-Ausgangsleitungen.

Der Steuersignalfluss stellt sich wie folgt dar. Über die Mikroprozessor-Schnittstelle MI wird Information zur Adressierung in den Vermittlungs-RAM SR geschrieben. Die Adresse einer Zelle des Vermittlungs-RAMs SR, wo die Vermittlungs-Information eingeschrieben ist, stellt exakt ein Bit der PCM-Ausgangsdaten dar. Mit anderen Worten wählt die Adresse eine bestimmte Ausgangsleitung und die Bitposition, d.h. die zeitliche Reihenfolge der Bits einer Ausgangsleitung, in einem PCM-Rahmen aus, der über die PCM-Ausgangsleitung übertragen wird.

Die Vermittlungs-Information enthält die Information darüber, was mit dem Bit zu geschehen hat. Wenn das Modus-Bit der Vermittlungs-Information gleich 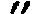 1" ist, wählt die Vermittlungs-Information ein Bit aus einer vorgegebenen Eingangsleitung aus. Wenn das Modus-Bit der Vermittlungs-Information gleich 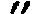 0" ist, bestimmt die Vermittlungs-Information, ob die Ausgangsleitung im Tristate-Zustand während der Zeitdauer des Ausgangs-Bits ist oder ob ein Bit mit einem vorgegebenen Wert, welches in der Vermittlungs-Information enthalten ist, zu der PCM-Ausgangsleitung gesendet wird.

Der zentrale Controller CC liest die Vermittlungs-Information von dem Vermittlungs-RAM SR. Wenn das Modus-Bit gleich 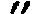 1" ist, was bedeutet, daß Bit-Abbildung durchgeführt werden soll, wählt der zentrale Controller CC den normalen Datenpfad, wenn das zu vermittelnde Bit nicht zeitkritisch ist. Andernfalls wählt der zentrale Controller CC einen Bypass-Datenpfad. Wenn der normale Datenpfad ausgewählt worden ist, liefert der zentrale Controller CC an den Eingangs-RAM IR die ausgelesene Adresse und an die Vermittlungs-Einheit SU die Information, welches Bit von den Eingangs-RAM-Daten ausgewählt werden soll. Wenn der Bypass-Datenpfad ausgewählt worden ist, wählt der zentrale Controller CC das Bit, welches aus einem PCM-Eingangs-Bypassregister vermittelt werden soll, aus, so daß das Bit direkt an die PCM-Ausgangsleitung weitergegeben wird.

Die PCM-Schnittstelle PI schreibt die empfangenen Daten in den Hintergrundbereich des Eingangs-RAMs IR. Gleichzeitig werden zwei unabhängige Adressen von dem Vordergrundbereich des Eingangs-RAMs IR ausgelesen, um je ein Bit an eine selektierte Position eines PCM-Rahmens einer Ausgangsleitung zu vermitteln. Mit dieser Vorgehensweise werden die augenblicklichen PCM-Rahmen von jeder Eingangsleitung in den Hintergrundbereich gespeichert, während die vorher abgespeicherten PCM-Rahmen zu den Ausgangsleitungen vermittelt werden. Diese parallele Arbeitsweise, d.h. das gleichzeitige Auslesen von zwei Adressen, ist erforderlich, um den erforderlichen Durchsatz beim bitweisen Vermitteln zu erreichen. Diese parallele Arbeitsweise wird in verschiedenen Teilbereichen des BISON-Bausteins verwirklicht.

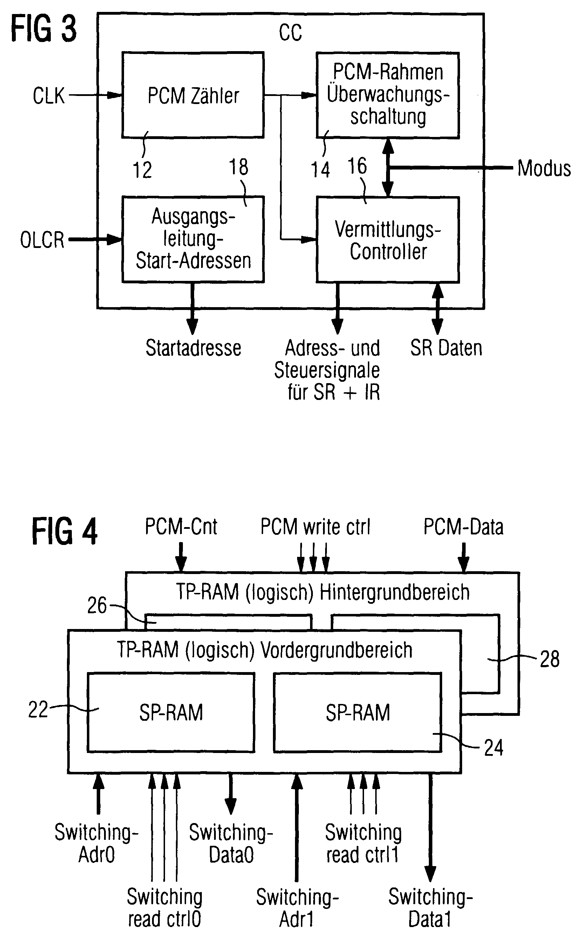

Der in Figur 3 gezeigte zentrale Controller CC steuert in dem BISON-Baustein 2 den Datenfluss der PCM-Daten von z.B. 16 PCM-Eingangsleitungen durch den Eingangs-RAM IR und die Vermittlungs-Einheit SU oder in Spezialfällen durch ein Bypass-Register (wie noch beschrieben wird) an die z.B. 16 PCM-Ausgangsleitungen. Der zentrale Controller CC hat alle Timing-Informationen, die von dem synchronisierenden PCM-Rahmensignal PFRAME und dem Taktsignal CLK erforderlich sind, welches einen internen PCM-Zähler 12 treibt. Um die Einheiten, die mit dem BISON-Baustein kommunizieren, informiert zu halten, wird eine Überwachung des PCM-Rahmensignals in einer PCM-Rahmenüberwachungsschaltung 14 durchgeführt. Ein Interrupt wird erzeugt, wenn bei dem Synchronisierungs-PCM-Rahmen-Puls ein Fehler auftritt.

Der zentrale Controller CC hat einen Vermittlungs-Controller 16 als Schnittstelle zu dem Vermittlungs-RAM SR, um die Vermittlungs-Einheit SU mit Vermittlungs-Information zu versorgen. Um einen korrekten Zugriff zu gewährleisten, berechnet der zentrale Controller CC die Startadresse jeder Ausgangsleitung in dem Vermittlungs-RAM SR von den Ausgangssignalen eines Ausgangsleitungs-Konfigurationsregisters OLCR, wie noch beschrieben wird.

Die Timing-Information, die in dem BISON-Baustein benötigt wird, wird von dem PCM-Zähler 12 abgeleitet. Der Zähler zählt jedesmal dann um eins weiter, wenn die ansteigende Flanke des Taktsignales CLK auftritt, und er wird synchron mit der Detektion des Synchronisationspulses PFRAME zurückgesetzt. Der zentrale Controller CC ist daher jederzeit über das augenblickliche Bit in einem PCM-Rahmen, der zu verarbeiten ist, informiert.

Auch das PCM-Rahmensignal PFRAME wird von dem PCM-Zähler 12 überwacht. Der PCM-Zähler 12 erzeugt den Interrupt, wenn der Impuls PFRAME im Bezug auf den zu erwartenden Beginn des nächsten Rahmens zu spät eintrifft, das heißt, wenn der PCM-Zähler 12 auf 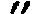 0" zurückgeschaltet wird und kein Impuls PFRAME detektiert wird. Ein Interrupt wird auch dann erzeugt, wenn der Impuls PFRAME zu früh im Bezug auf den erwarteten Beginn des nächsten Rahmens detektiert wird, das heißt, daß der synchron arbeitende PCM-Zähler 12 den falschen Wert aufweist. Der festgelegte Komparatorwert hängt von dem Zustand des Taktfrequenzsignals CLKFR ab. Daher erwartet der PCM-Zähler 12 den nächsten Synchronisationsimpuls des Impulses PFRAME bei dem Wert 2047, wenn das Taktsignal auf eine Frequenz von 16.384 MHz konfiguriert ist. Dieser Komparator wird auf 4095 festgelegt, wenn ein Taktsignal mit 32.768 MHz konfiguriert ist.

Die Startadresse und der erforderliche Platz für die Adresse für jede Ausgangsleitung werden von dem Ausgangsleitungs-Konfigurationsregister OLCR berechnet. Nach dem Einschreiben des Ausgangsleitungs-Konfigurationsregistersignals wird eine neue Berechnung durchgeführt, wodurch der Inhalt des Vermittlungs-RAM SR neu unterteilt wird. Wenn die Berechnung einen Durchsatz von mehr als 32 Mbit/s bei 16.384 MHz bzw. 64 Mbit/s bei 32.768 MHz ergibt, wird ein Interrupt erzeugt.

Der Vermittlungs-Controller 16 dient zur zeitlichen Koordinierung, um einen Satz von 16 Bit bei 16.384 MHz bzw. 32 Bit bei 32.768 MHz an der PCM-Schnittstelle bereitzustellen und die PCM-Ausgangsleitungen gerade zur richtigen Zeit zu speisen. Der erste Schritt dieses komplexen Vorganges besteht darin, vier Adressen aus dem Vermittlungs-RAM SR bei jedem zweiten Taktzyklus auszulesen. Nach dem Auslesen der Vermittlungs-Information aus dem Vermittlungs-RAM SR muß der Vermittlungs-Controller 16 entscheiden, ob ein Bit von dem PCM-Eingang durch den Eingangs-RAM IR und die Vermittlungs-Einheit SU an den PCM-Ausgang weitergegeben werden soll oder ob das Bit direkt von dem PCM-Eingang an dem PCM-Ausgang im Bypassbetrieb weitergeleitet werden soll, wenn das Bit an dem PCM-Eingang sehr schnell an dem PCM-Ausgang benötigt wird. Wie aus Figur 2 zu ersehen ist, haben die beiden Datenpfade denselben Start- und Endpunkt, sie haben jedoch einen unterschiedlichen Übertragungsweg, so daß auch eine entsprechende bitindividuelle zeitliche Kontrolle der Vermittlung erforderlich wird.

Figur 4 zeigt beispielhaft die logische Struktur des Eingangs-RAM IR. Das Eingangs-RAM IR besteht aus vier SP-RAMs 20 bis 26 (z.B. mit 1024 x 16 Bit) (SP-RAM = Single Port RAM = RAM mit einem einzigen Port). Zwei SP-RAMs, beispielsweise die SP-RAMs 20, 22 sind logisch so zueinander gruppiert, daß sie einen TP-RAM (Triple Port RAM = RAM mit dreifachem Port) bilden.

Die PCM-Schnittstelle PI schreibt die empfangenen Daten in den TP-RAM des Hintergrundbereichs. Gleichzeitig werden zwei unabhängige Adressen von dem TP-RAM des Vordergrundbereiches ausgelesen, um ein Bit von jedem Leseport an eine ausgewählte Position eines PCM Rahmens auf einer Ausgangsleitung zu vermitteln. Mit dieser Vorgehensweise werden die gegenwärtigen PCM-Rahmen von jeder Eingangsleitung in den TP-RAM des Hintergrundbereiches aufgesammelt, während die vorher aufgesammelten PCM-Rahmen zu den Ausgangsleitungen vermittelt werden. Um diese Funktion zu ermöglichen, werden, wie in Figur 4 gezeigt ist, die Signale 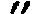 PCM-Data", 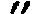 PCM Write CTRL" und 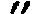 PCM-Cnt" in den TP-RAM des Hintergrundbereiches eingegeben. Der SP-RAM 22 des Vordergrundbereiches nimmt die Signale 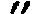 Switching-Adr0" und 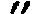 Switching read ctr10" auf und gibt die Signale 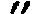 Switching-Data0" ab, während der SP-RAM 24 des Vordergrundbereiches die Signale 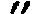 Switching-Adr1" und 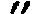 Switching read ctr11" aufnimmt und die Signale 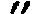 Switching-data1" abgibt.

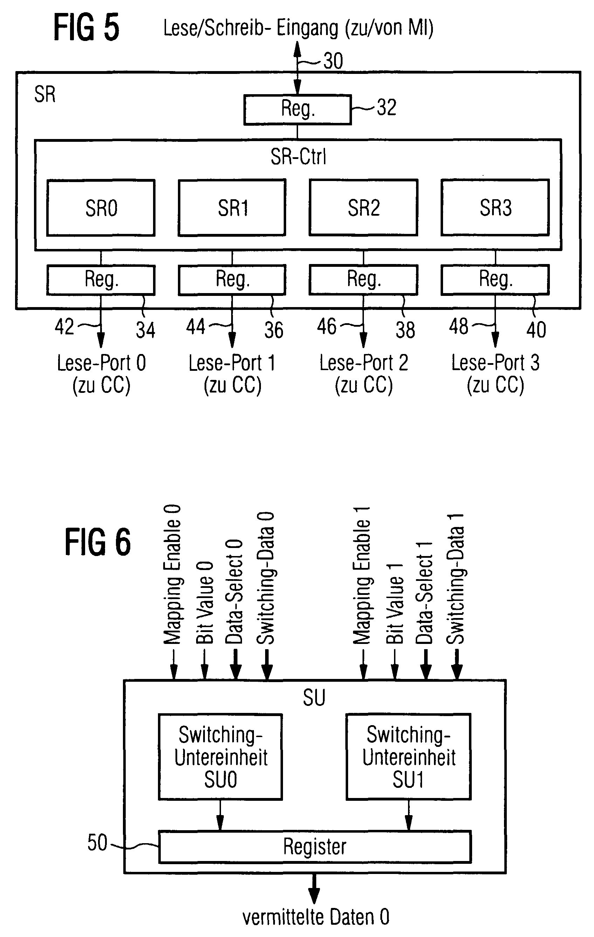

Der in Figur 5 gezeigte Vermittlungs-RAM SR liefert die notwendige Information, um die Eingangs-PCM-Daten auf die Ausgangs-PCM-Daten abzubilden, d.h. zu vermitteln. Jede Adresse des Vermittlungs-RAMs SR repräsentiert eine bestimmte Bitposition auf einer der PCM-Ausgangsleitungen. Die Daten dieser Adresse bezeichnen exakt ein Bit von den Eingangs-PCM-Daten, die in dem Eingangs-RAM IR gespeichert sind, das auf die PCM-Ausgangsleitung in der oben beschriebenen Weise abgebildet wird. Wenn ein Durchsatz von 32 MBit/s bei 16.384 MHz oder 64 MBit/s bei 32.768 MHz gefordert wird, müssen zwei Bits pro Taktzyklus abgebildet werden. Wenn jeder zweite Taktzyklus für einen Zugriff über die Mikroprozessorschnittstelle MI zur Verfügung gestellt wird, ist es notwendig, 4 Bits bei jedem zweiten Taktzyklus abzubilden. Mit anderen Worten müssen vier Adressen des Vermittlungs-RAMs SR bei jedem zweiten Taktzyklus ausgelesen werden.

Um diese Funktion zu ermöglichen, weist der Vermittlungs-RAM SR einen Lese-/Schreib-Eingang 30 zum Einlesen beziehungsweise Auslesen von Daten von der Mikroprozessorschnittstelle MI auf. Die Daten gelangen über ein Register 32 zu vier Speicherbereichen Vermittlungs-RAM SR0, SR1, SR2 und SR3 mit z.B. 1024 x 16 Bit. Die Ausgänge der Vermittlungs-RAMs SR0, SR1, SR2 und SR3 gelangen über jeweils ein Register 34, 36, 38, 40 zu Leseports 42, 44, 46, 48 und von dort zu dem zentralen Controller CC.

Figur 6 zeigt die Struktur der Vermittlungs-Einheit SU. Die Vermittlungs-Einheit SU wird mit PCM-Eingangsdaten und der entsprechenden Vermittlungs-Information gespeist, die von dem zentralen Controller CC ausgewählt wurde. Bei einer Taktfrequenz von 16.384 MHz müssen zwei Bits pro Taktzyklus vermittelt werden, um einen Durchsatz von 32 MBit/s zu erzielen. Daher sind zwei Vermittlungs-RAM-Untereinheiten SU0 und SU2 parallel angeordnet, von denen jeweils eine ein Bit pro Taktzyklus vermittelt. Während 16 Bits zu den Ausgangsleitungen verteilt werden, wie es in dem Ausgangsleitungs-Konfigurationsregister programmiert ist, werden die nächsten 16 Bits in einem Register 50 gesammelt. Die oben beschriebene Vorgehensweise wird benutzt, um das Register 50 zu füllen, wenn die Vermittlung eingeschaltet ist. Wenn die Bit-Vermittlung abgeschaltet und das Mustereinfügen eingeschaltet ist, wird das VAL-Bit statt des ausgewählten Bits von der Vermittlungs-Information in das Register 50 eingefügt. Die Ausgangsleitung ist in einem Tristate-Zustand, wenn die Vermittlung und das Einfügen von Mustern abgeschaltet ist.

Wie aus Figur 6 zu ersehen ist, werden die Signale 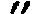 Switching-Data 0", 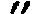 Data-Select 0", 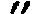 Bit Value 0" und 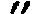 Mapping Enable 0" in die Vermittlungs-RAM-Untereinheit SU0 eingegeben, und die entsprechenden Signale 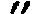 Switching-Data 1", 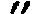 Data-Select 1", 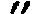 Bit-Value 1" und 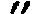 Mapping Enable 1" werden in die Vermittlungs-RAM-Untereinheit SU1 eingegeben. Über das Register 50 werden die vermittelten Daten 0 ausgegeben.

Über die PCM-Schnittstelle PI kann der BISON-Baustein Signale von bis zu 16 PCM-Eingangsleitungen aufnehmen und verarbeiten und über 16 PCM-Ausgangsleitungen ausgeben. Die Steuerung erfolgt über ein Rahmensynchronisationssignal PFRAME und ein Taktsignal SCLK. Ein PCM-Rahmen besteht aus mehreren Zeitschlitzen mit 8 Bits pro Zeitschlitz.

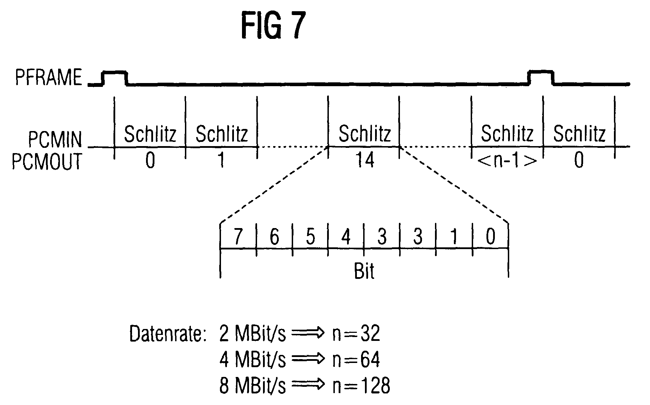

Die Struktur eines PCM-Rahmens ist in Figur 7 schematisch dargestellt. Bei dem BISON-Baustein ist als globale Einstellung für alle Eingangs- und Ausgangsleitungen die Flanke des PCM-Taktsignales zum Abtasten des Daten- und Rahmensignals und eine 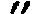 Zeitschlitz-0-Verzögerung nach PFRAME" konfigurierbar. Für jede Eingangsleitung ist die Datenrate (aus, 2 MBit/s 4 MBit/s, 8 MBit/s) unabhängig konfigurierbar. Für jede Ausgangsleitung ist die Datenrate (aus, 2 MBit/s, 4 MBit/s, 8 MBit/s), ein aktives Niveau des tristate-Buffers und eine tristate-Schutzperiode (tristate guard period) von einem Viertel der Datenperiode unabhängig konfigurierbar. Die gesamte Datenrate der Ausgangsleitungen kann 32 MBit/s bei 16.384 MHz oder 64 Mbyte/s bei 32.768 MHz nicht überschreiben. Ein PCM-Rahmen besteht aus 256 Bits (2 MBit/s), 512 Bits (4 MBit/s) oder 1024 Bits (8 MBit/s) . Im Gegensatz zum Stand der Technik arbeitet der BISON-Baustein nur mit einzelnen Bits statt mit Zeitschlitzen, die aus Bits bestehen. Die gesamte Struktur ist auf ein bitorientiertes Vermitteln abgestellt.

Da jede Adresse ein Bit eines PCM-Rahmens einer bestimmten Ausgangsleitung repräsentiert, benötigt jede Ausgangsleitung einen unterschiedlichen Adressenraum, der von der Datenrate dieser Ausgangsleitung abhängt. Daher hängt die Aufteilung (partitioning) des Vermittlungs-RAMs SR von dem Wert des Ausgangsleitungs-Konfigurationsregisters ab. Die Startadresse einer PCM-Ausgangsleitung kann mit der folgenden Gleichung berechnet werden:
Startadresse (0) = 0;
Startadresse (i) = Startadresse (i - 1) + range (i - 1); i ∈ [1; 15];
range (i-1) kann aus der folgenden Tabelle entnommen werden:

| Datenrate | range (dec) |
|---|---|
| AUS | 0 |
| 2 MBit/s | 256 |
| 4 MBit/s | 512 |
| 8 MBit/s | 1024. |

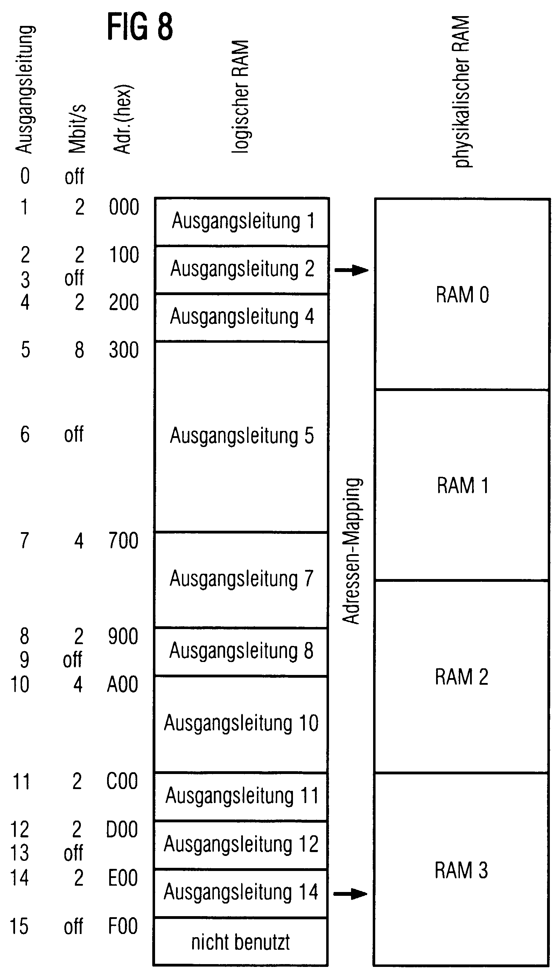

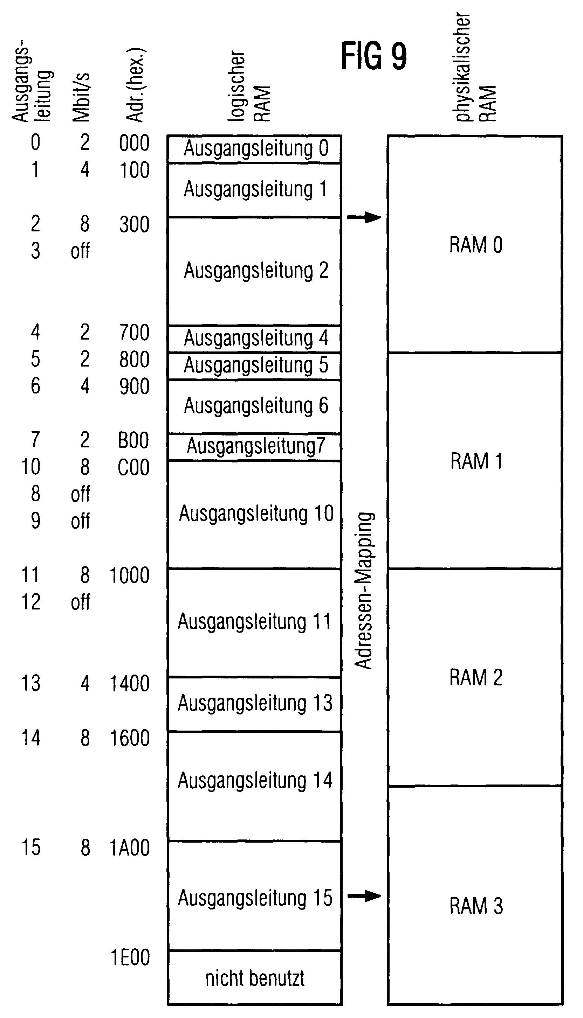

Figur 8 zeigt ein Beispiel für eine mögliche Konfiguration der PCM-Ausgangsleitungen und die entsprechende Aufteilung des Vermittlungs-RAMs SR in vier Bereiche RAM0, RAM1, RAM2 und RAM3 für einen Durchsatz von 32 MBit/s bei 16.384 MHz. Figur 9 zeigt ein entsprechendes Beispiel für einen Durchsatz von 64 MBit/s bei 32.768 MHz.

Wie aus den Figuren 8 und 9 zu entnehmen ist, werden die Adressenplätze für jede Ausgangsleitung ungleich AUS (off) ohne Lücke gekettet (concatenated). Eine neue Konfiguration der PCM-Ausgangsleitungen führt daher zu einer neuen Unterteilung des Vermittlungs-RAMs SR und führt dazu, daß die Konfiguration des Vermittlungs-RAMs SR überholt ist, d.h. der gesamten Vermittlungs-RAM SR erneut beschrieben wird. Ferner zeigen die Beispiele, daß der BISON-Baustein eine Vermittlungskapazität von bis zu 64 MBit/s bei 32.768 MHz hat, weil der Vermittlungs-RAM SR auf 8192 Adressen (8192 Bits/125 µsek = 64 MBit/s) beschränkt ist. Die Konfiguration der PCM-Ausgangsleitungen mit weniger als 64 MBit/s ergibt einen ungenutzten Adressenraum. Wenn der BISON-Baustein bei 16.384 MHz betreiben wird, ist die Vermittlungs-Kapazität des BISON-Bausteines auf 32 MBit/s beschränkt, weil nur 2 Bits pro Taktzyklus vermittelt werden können.

Beim Einschalten des BISON-Bausteins beziehungsweise des zentralen Controllers CC empfängt die Vermittlungs-Einheit SU 16-Bit-Daten von dem Eingangs-RAM IR und wählt das eine Bit aus, welches an eine ausgewählte PCM-Ausgangsleitung vermittelt werden soll. Die Information, dieses Bit auszuwählen, wird von dem zentralen Controller CC abgegeben, der diese Information aus dem Vermittlungs-RAM SR ausliest. Der zentrale Controller CC muß vier Adressen für je vier (16.384 MHz) beziehungsweise acht (32.768 MHz) Lesezugriffe lesen, um 16 Bits (16.384 MHz) beziehungsweise 32 Bits (32.768 MHz) von dem Eingang zum Ausgang zu vermitteln. Damit der zentrale Controller CC die erforderliche Vermittlungs-Information unter Berücksichtigung jeder möglichen Ausgangsleitungs-Konfiguration lesen kann, muß die Vermittlungs-Information durch einen im Vermittlungs-RAM SR gespeicherten Vermittlungsalgorithmus beziehungsweise in den Abschnitten RAM 0, RAM 1, RAM 2, RAM 3 des Vermittlungs-RAMs SR erzeugt werden.

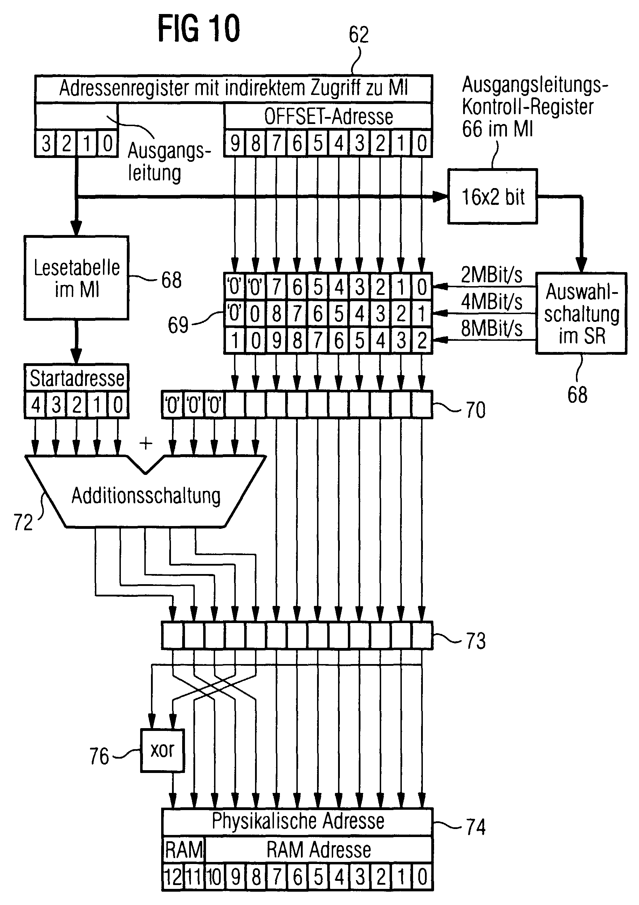

Ein Adress-Abbildungsalgorithmus als Teil des Vermittlungsalgorithmus ist in Figur 10 dargestellt. In einem Adressenregister 62 mit indirektem Zugriff in der Mikroprozessor-Schnittstelle MI ist die Nummer der Ausgangsleitung (4 Bit) und eine Offset-Adresse (10 Bits) gespeichert. Aus der Nummer der Ausgangsleitung wird über eine Lesetabelle 64, die ebenfalls in der Mikroprozessor-Schnitt-stelle MI vorhanden ist, eine Startadresse (5 Bits) erzeugt. Aus der Kennzeichnung der Ausgangsleitung wird ferner über ein Ausgangsleitungs-Konfigurationsregister 66 in der Mikroprozessor-Schnittstelle MI und eine Auswahlschaltung 68 in dem Vermittlungs-Register SR ausgewählt, welche Datenrate, 2 MBit/s oder 4 MBit/s oder 8 MBit/s, verarbeitet werden soll. Ein Steuerregistersatz 69 enthält unterschiedliche Datenraten bezoge Daten. Bei einer Datenrate von 8 MBit/s werden beispielsweise die Werte aus den Stellen 0 und 1 der OFFSET-Adresse als Werte für die von links vierte und fünfte Stellen eines darunter abgebildeten Zwischendatensatzes 70 verwendet.

Die Startadresse und die Werte der ersten fünf Stellen des Zwischendatensatzes 70 von links werden in einer Additionsschaltung 72 bitweise addiert und bilden die ersten fünf Stellen von links für einen Datensatz 73, der Zwischenwerte für eine physikalische Adresse 74 darstellt. Die Stellen 6 bis 13 des Datensatzes 73 entsprechen den Stellen 6 bis 13 des Zwischendatensatzes 70.

Aus dem Datensatz 73 der Zwischenwerte für die physikalische Adresse wird die endgültige physikalische Adresse 74 dadurch gewonnen, daß die Werte der ersten drei Stellen des Datensatzes 73 auf die Stellen 3 bis S der physikalischen Adresse gebracht werden. Der Wert der fünften Stelle der Datensatzes 72 wird auf die zweite Stelle der physikalischen Adresse 74 gebracht, und der Wert der vierten Stelle des Datensatzes 73 wird zusammen mit dem Wert der 13. Stelle des Datensatzes 73 einem XOR-Gatter 76 zugeführt, dessen Ausgang den Wert für die erste Stelle der physikalischen Adresse 74 darstellt. Durch die Vertauschung der ersten fünf Stellen des Datensatzes 73 wird sichergestellt, daß die Bits einer Ausgangsleitung auf jeweils verschiedene Unterbereiche des Vermittlungs-RAM SR verteilt werden. Dies ist erforderlich, damit in dem vorliegenden Beispiel vier Adressen gleichzeitig und parallel aus dem Vermittlungs-RAM SR ausgelesen werden können. Das XOR-Gatter 76 ist erforderlich, um diesen Mechanismus auch bei einer Datenrate von 2 MBit/s verwirklichen zu können.

Wie bereits dargelegt wurde, müssen 16 Bits an der PCM-Ausgangsleitung innerhalb von 8 Taktzyklen abgeliefert werden, um einen Durchsatz von 32 MBit/s zu erreichen. Der Vermittlungs-Controller SC in dem zentalen Controller CC muß 4 Adressen aus dem Vermittlungs-RAM SR bei je 2 Taktzyklen auslesen. Die vermittelten Bits werden in ein Register in der Vermittlungs-Einheit SU eingelesen, die die Information für die PCM-Ausgangsleitungen liefert. Um das Register zu füllen, muß der Vermittlungs-RAM SR viermal bei 16.384 MHz bzw. doppelt so oft bei 32.768 MHz ausgelesen werden.

Wenn man die Aufteilung des Vermittlungs-RAMs SR betrachtet, wenn die Ausgangsleitungen auf 16 x 2 MBit/s konfiguriert sind, stellt sich der Vermittlungsalgorithmus wie folgt dar:
1) Lese die 4 Adressen 0 von den vier RAMs
2) Das Vermitteln wird in zwei Schritten durchgeführt, da nur zwei unabhängige Untereinheiten in der Vermittlungs-Einheit (SU) vorhanden sind:
   i) Vermittle ein Bit für OL0 und OL8
   ii) Vermittle ein Bit für OL4 und OL12
3) Wiederhole die Schritte und 1) und 2) für die Adressen 256, 512 und 768
4) Erhöhe den Wert der Adressen (0, 256, 512, 768) um eins und wiederhole die Schritte 1) bis 3) bis zu den Werten (255, 511, 767, 1023)
Beim Auslesen von geradzahligen Adressen werden die Informationen der RAMs 0 und 1 vor denen der RAMs 2 und 3 vermittelt, bei ungeraden Adressen ist es umgekehrt.

Das vorstehende Beispiel zeigt den Fall, daß alle 16 Ausgangsleitungen mit 2 MBit/s betrieben werden. Das Register kann jedoch auch bei einer beliebigen Konfiguration der Ausgangsleitungen geladen werden, um eine Vermittlungs z.B. nach Figur 8 zu verwirklichen.

Diese Beispiele zeigen, daß die PCM-Eingangs- und Ausgangsleitungen völlig frei konfiguriert werden können und zwar so, daß eine Leitung physikalisch ausgeschaltet werden kann beziehungsweise nicht vorhanden zu sein braucht oder mit 3 verschiedenen Datenraten betrieben werden kann.

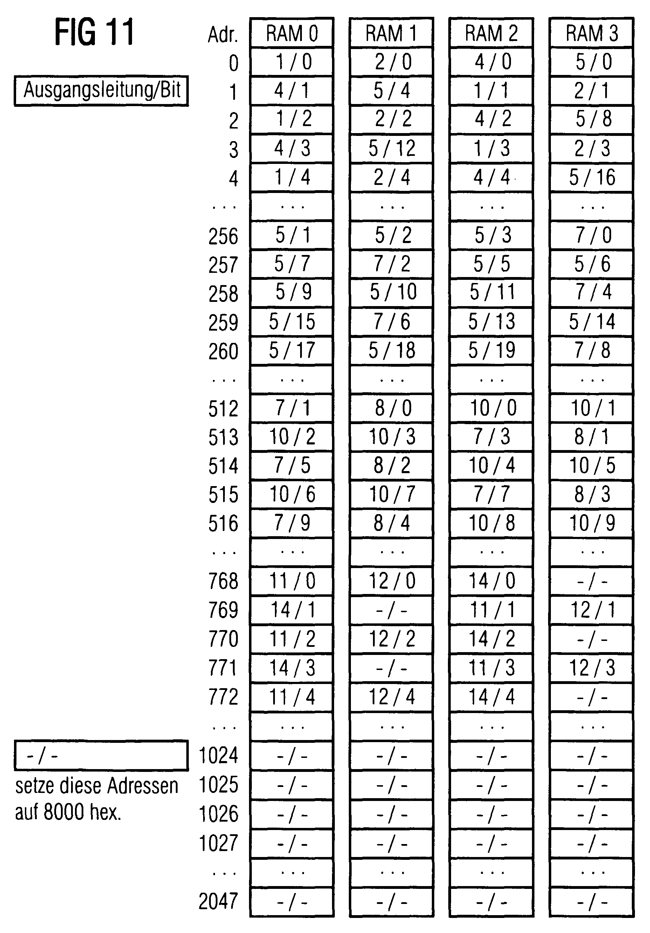

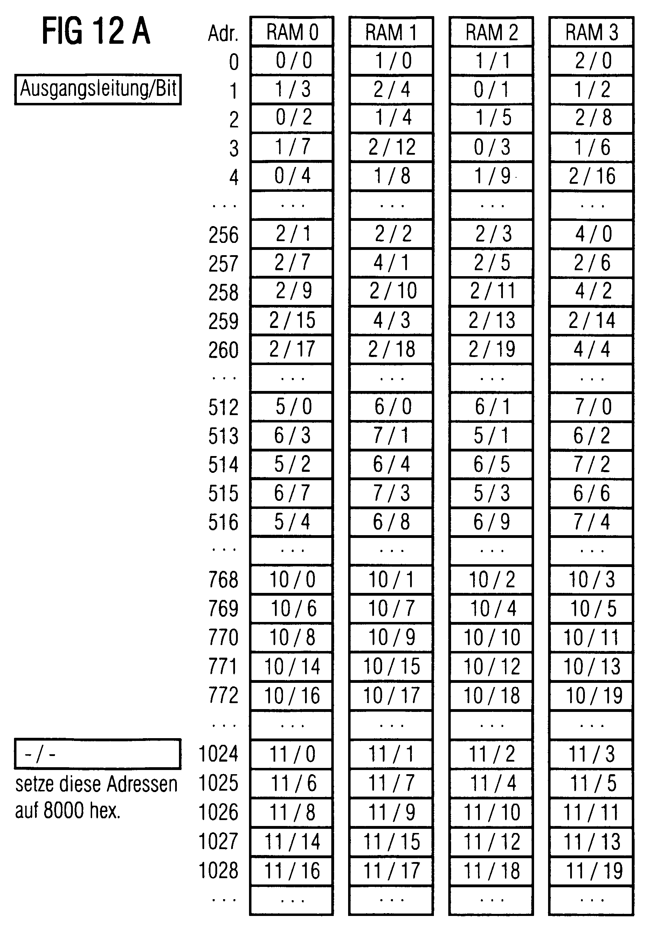

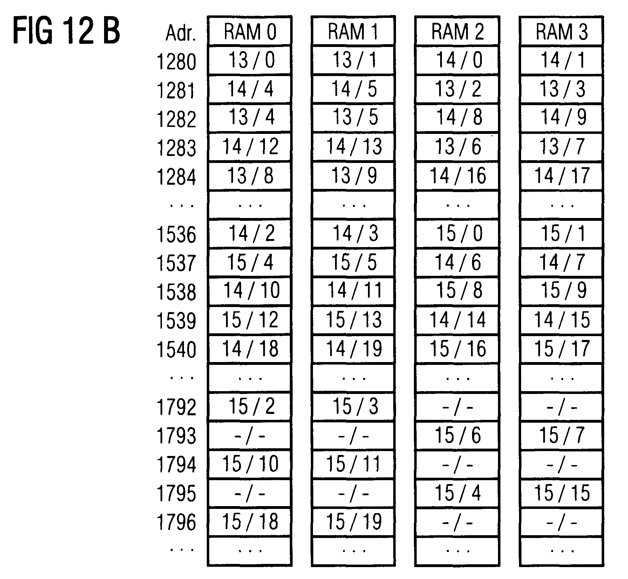

Das Ergebnis aus der Anwendung des Adressen-Abbildungsalgorithmus ist in den Figuren 11 für das Abbilden von 32 MBit/s bei 16.384 MHz und in den Figuren 12A und 12B für das Abbilden von 64 MBit/s bei 32.768 MHz dargestellt. So wird sichergestellt, daß beim Auslesen der Vermittlungs-RAM-Bereiche RAM 0, RAM 1, RAM 2 und RAM 3 beispielsweise die Adressen mit der Nummer 0, 256, 512 und 768 jeweils in Vierersätzen parallel ausgelesen werden können, wobei die Adressen für vier Bits auf einer Ausgangsleitung jeweils in unterschiedlichen Vermittlungs-RAM-Unterbereichen abgelegt sind, so daß ein kollisionsfreies Auslesen möglich wird.

Bei jedem Vermittlungs-Zyklus muß der zentrale Controller CC, der auf 16.384 MHz konfiguriert ist, vier aquidistante Adressen aus jedem RAM in dem Vermittlungs-RAM SR quasisequenziell auslesen, die durch die folgenden Vierergruppen dargestellt sind:
(0, 256, 512, 768);
(1, 257, 513, 769); ...;
(n, n+256, n+512, n+768); ...;
(255; 511; 767, 1023).

Bei einer Konfiguration auf 32.768 MHz müssen 8 Adressen aus jedem RAM in dem Vermittlungs-RAM SR bei jedem Mapping-Zyklus wie folgt ausgelesen werden:
(0,256, 512, 768, 1024, 1280, 1536, 1792);
(1,257, 513, 769, 1025, 1281, 1537, 1793);...;
(n, n+256, n+512, n+768, n+1024, n+1280, n+1536, n+1792);...;
(255, 511, 767, 1023, 1279, 1535, 1791, 2047).

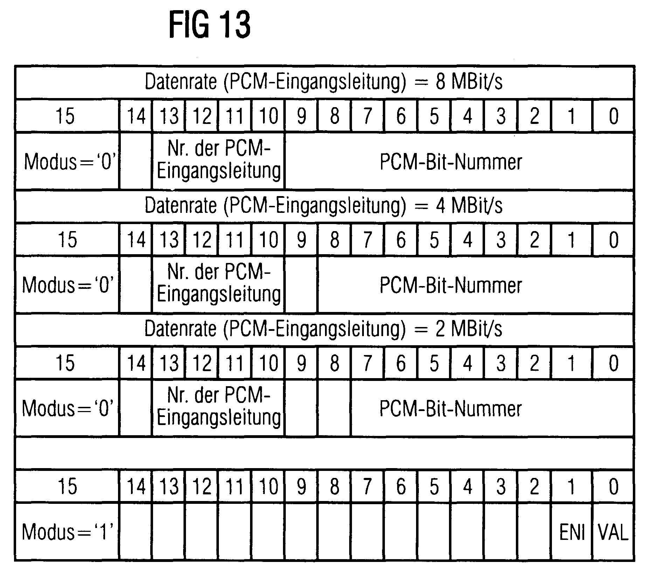

Jede Adresse des Vermittlungs-RAMs SR enthält eine 16-Bit-Information als Vermittlungs-Information, um ein Bit des Eingangs-RAMs IR auf eine Position einer Ausgangsleitung zu vermitteln, die durch die Adresse spezifiziert ist. Die Interpretation der Information ist in Figur 13 dargestellt, wobei in den oberen drei Teilbereichen die Interpretation für den Modus = 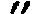 0" und eine Datenrate von 8 MBit/s beziehungsweise 4 MBit/s beziehungsweise 2 MBit/s und im unteren Teil die Interpretation der Information für den Modus = 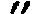 1" dargestellt ist.

Die in Figur 13 verwendeten Begriffe werden wie folgt erläutert:
Modus:
   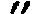 0": Bit-Vermittlung ist eingeschaltet; das zu vermittelnde Bit wird von dem Eingangs-RAM IR übermittelt,
   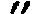 1": Bit-Vermittlung ist abgeschaltet; das zu vermittelnde Bit wird von dem Vermittlungs-RAM SR übermittelt.
PCM-Eingangsleitung:
   Damit wird eine PCM-Eingangsleitung nach Nummern bezeichnet.
PCM-Bitnummer:
   Bezeichnet ein Bit in einem PCM-Rahmen; der Bereich (range) hängt von der Eingangsdatenrate der entsprechenden PCM-Eingangsleitung ab.
ENI (enable pattern insertion)
   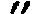 0": Mustereinfügung ist abgeschaltet; Ausgangsleitung ist im Tristate-Zustand
   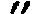 1": Mustereinfügung ist eingeschaltet;
VAL (pattern value)
   Muster ∈ { 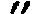 0", 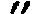 1"} ist einzufügen, statt der Bit-Vermittlung.

Bei dem Modus = 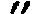 0" sind die Bits 13 bis 10 für die Nummer der PCM-Eingangsleitung reserviert. Bei einer Datenrate von 8 MBit/s werden die zehn Bits 9 bis 0 für die PCM-Bitnummer verwendet. Bei einer Datenrate von 4 MBit/s werden nur die neun Bits 8 bis 0 für die PCM-Bitnummer benötigt, und bei einer Datenrate von 2 MBit/s werden nur die acht Bits 7 bis 0 für die PCM-Bitnummer benötigt. Dies ergibt sich aus der unterschiedlichen Bitrate. Bei dem Modus = 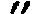 1" werden nur die Bits 15 für die Kennzeichnung des Modus und die Bits 1 und 0 für die Signale ENI beziehungsweise VAL eingesetzt.

Wie bereits erwähnt wurde, soll der BISON-Baustein in der Lage sein, Bits von jeder Position des empfangenen Rahmens auf jede beliebige Position des gesendeten Rahmens zu vermitteln. Dabei treten Schwierigkeiten auf, wenn ein Bit von dem Ende des empfangenen Rahmens auf den Anfang des übertragenen Rahmens vermittelt werden soll. Der Datenpfad durch den Eingangs-RAM IR und die Vermittlungs-Einheit SU erfordert nur einige Takte, was in den meisten Fällen schnell genug ist. In den wenigen Fällen, in denen die Zeit hierfür nicht ausreicht, steht ein Bypass-Register zur Verfügung, um Bits von dem PCM-Eingang an den PCM-Ausgang in nur einem Taktzyklus weiterzugeben.

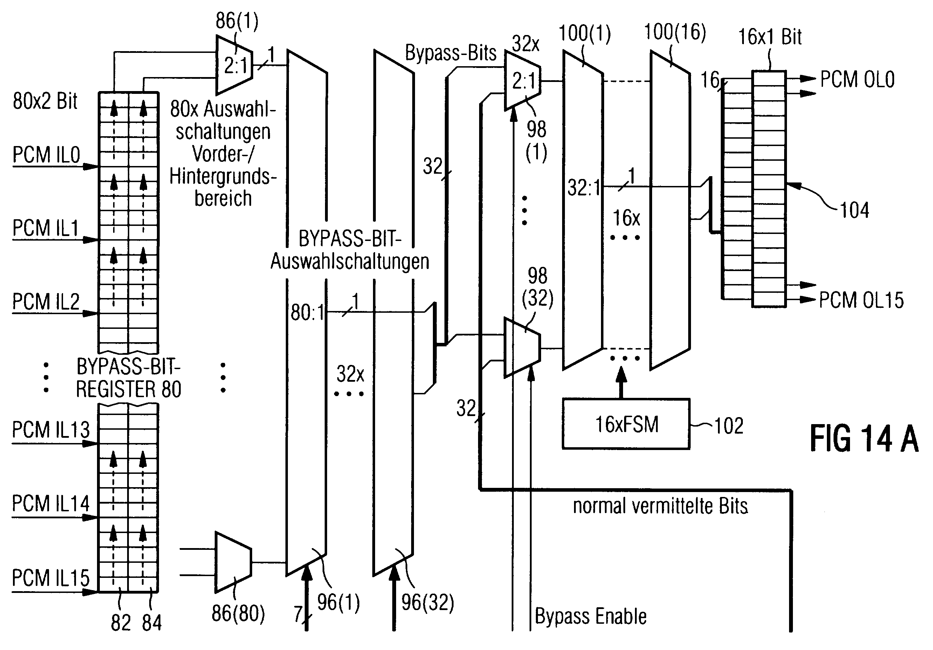

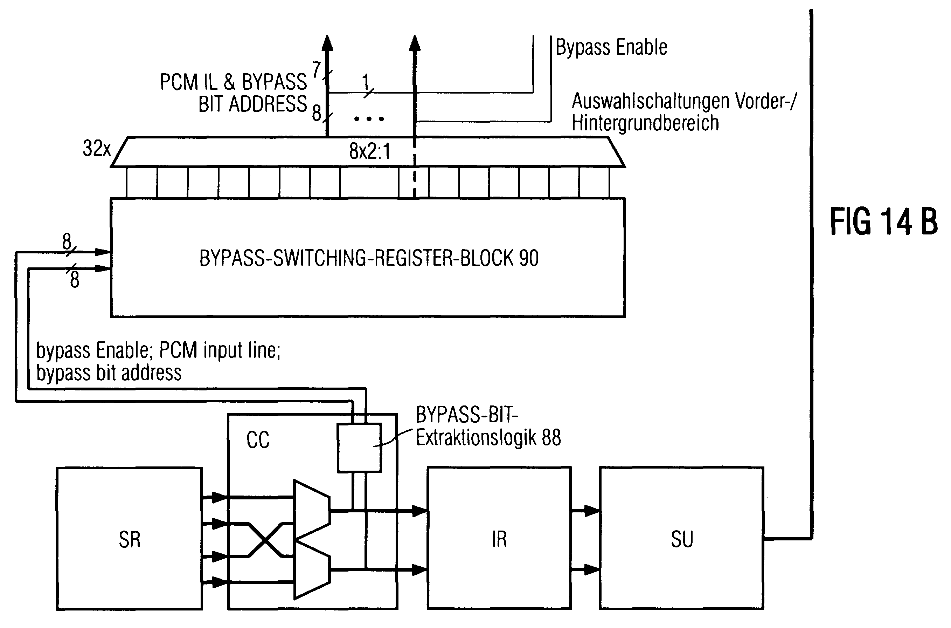

In Figur 14 ist detailliert gezeigt, wie der im Zusammenhang mit Figur 2 bereits erwähnte Bypass-Datenpfad verwirklicht ist. Je nach der Datenrate jeder PCM-Eingangsleitung werden einige Bits in ein Bypass-Bitregister 80 geschrieben. Der zentrale Controller CC kontrolliert den Zugriff zu dem Bypass-Bitregister 80, indem er eine kritische Vermittlungs-Information von dem Vermittlungs-RAM SR erkennt. Die Kontrollinformation besteht aus einer Information über die PCM-Eingangsleitung (Signal PCM IL), der Adresse des Bypass-Bits (BIT ADRESS) und dem Bypass-Aufschaltsignal (Bypass Enable oder EN).

Bei dem normalen Vermittlungs-Modus benötigt man 8 oder 16 Taktzyklen, um 16 beziehungsweise 32 Bits zu vermitteln. Die Vermittlungs-Einheit SU vermittelt diese Bits ohne Verzögerung. Der Eingangs-RAM IR ist mit der Vermittlungs-Einheit SU verbunden, um diese Bits dadurch abzugeben, daß er den Eingangs-RAM IR im Vordergrundbereich ausliest. Der Lesezugriff benötigt zwei Taktzyklen, einen für die Adressenverifizierung und einen zur Speicherung der Daten im RAM-Ausgangsregister für den Synchronbetrieb. Daher sind für einen kompletten Vermittlungs-Zyklus (8+2) beziehungsweise (16+2) Taktzyklen erforderlich.

Um die Bits für den neuen PCM-Rahmen zu liefern, muß der Lesezugriff des Eingangs-RAMs IR bei 10 beziehungsweise 18 Taktzyklen gestartet werden, bevor das neue PCM-Rahmensynchronisationssignal PFRAME eintrifft. Zu dieser Startzeit tauschen der RAM des Hintergrundbereichs des Eingangs-RAMs IR, in dem die gegenwärtigen PCM-Daten eingeschrieben sind, und der RAM des Vordergrundbereiches des Eingangs-RAM IR ihre Plätze. Daher ist ein Zugriff auf die folgenden Bits in dem Eingangs-RAM IR nicht möglich, weil sie nicht vor dem Umschalten in den Hintergrundbereich geschrieben werden können:
1) 8 Mbit/s : Bit 1019, 1020, 1021, 1022, 1023
2) 4 MBit/s : Bit 510, 511
3) 2 MBit/s : Bit 255

Alle diese Bits müssen in dem Bypass-Bitregister 80 gespeichert werden. Zwei 5-Bit-Schiebregister 82, 84, eines als Vordergrundregister und eines als Hintergrundregister, werden für jede Eingangsleitung als Bypass-Bit-Register verwendet. Das Vordergrundregister kann ausgelesen werden, während das Hintergrundregister mit den nächsten Bypass-Bits des als nächstes ankommenden PCM-Rahmens beschrieben wird. Alle Registerpaare tauschen ihre Plätze bei jedem neuen PCM-Rahmen. 80 2:1-Multiplexer 86 (1) bis 86 (80) wählen die Bits von dem augenblicklichen Vordergrundregister für das Vermitteln über den Bypass-Datempfad aus.

Der zentrale Controller CC erhält die gesamte Vermittlungs-Information von dem Vermittlungs-RAM SR. Zwei Multiplexer in dem zentralen Controller CC liefern die Adressen (Vermittlungs-Information) für den Eingangs-RAM IR. Bei jedem Taktzyklus leitet eine Bypass-Bit-Extraktionslogik 88 in dem zentralen Controller CC die Bypass-Vermittlungs-Information aus den beiden Vermittlungs-Informationsströmen an den Ausgängen der Multiplexer weiter. Die extrahierte Information jedes Stromes enthält 8 Bits: ein Bypass-Aufschaltungs-Bit, 4 PCM-Eingangsleitungs-Bits und 3 Bits, um die 5 Bypass-Bits zu adressieren. Um 16 Bits (32 MBit/s Durchsatz, 16 MHz Takt) innerhalb von 8 Taktzyklen zu vermitteln, müssen 16 x 8 Bits an Bypass-Vermittlungs-Information in einem Bypass-Vermittlungs-Registerblock 90 gespeichert werden. Wenn 32 Bits vermittelt werden müssen (64 MBit/s Durchsatz, 32 MHz Takt), müssen in 16 Taktzyklen 32 x 8 Bits gespeichert werden.

Der Bypass-Vermittlungs-Register-Block 90 weist ebenfalls Vordergrundregisterblöcke und Hintergrundregisterblöcke auf, die über 32 entsprechende 8 x 2: 1-Multiplexer 98(1) bis 98 (32) ausgelesen werden, deren Ausgänge zu Bypass-Bit-Auswahlschaltungen 96 (j), j=1,..., 32, führen. In Figur 14 ist der Fall dargestellt, bei dem das System auf 64 MBit/s Durchsatz bei 32 MHz Takt konfiguriert ist. Im Folgenden werden jedoch auch die Angaben für den Fall gemacht, daß 32 MBit/s bei 16 MHz konfiguriert ist, indem auf die entsprechende Anzahl von Taktzyklen und Schaltungen hingewiesen wird.

Beim Zugriff auf die 5 Bypass-Bits während 8 beziehungsweise 16 Taktzyklen (16 beziehungsweise 32 MHz) darf die neue Bypass-Vermittlungs-Information nicht die gegenwärtige Information überschreiben, d.h. der Vordergrundregisterblock wird gelesen und der Hintergrundregisterblockwird gleichzeitig beschrieben. Die Registerblöcke vertauschen ihre Plätze nach jeweils 8 beziehungsweise 16 Taktzyklen. Der Vordergrundregisterblock 92, der ausgelesen wird, erhält seine Information während 8 beziehungsweise 16 Zyklen und gibt diese Information an alle 16 beziehungsweise 32 Bypass-Bit-Auswahlschaltungen 96(j), j=1,..., 32, gleichzeitig ab. Die Bypass-Bit-Auswahlschaltungen 96 sind 80:1-Multiplexer. Daher werden alle Bypass-Bits, die vermittelt werden müssen, während 8 beziehungsweise 16-Taktzyklen ausgewählt. Die Bypass-Bit-Auswahlschaltungen 96 (j) umfassen 80:1-Multiplexer. Diese unbenutzten Eingänge werden ausgewählt, um eine Adresslogik für die Auswahlschaltungen zu vermeiden. Eine Bypass-Bit-Auswahladresse besteht aus 7 Bits (4 Bits für die PCM-Eingangsleitung und 3 Bits für die Bypass-Bit-Adresse).

Die Bits, die über den Bypass-Datenpfad vermittelt werden sollen, werden durch ein 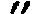 Bypass-Enable"-Bit ausgewählt, welches einem von 32 2:1-Multiplexern 98(j), j=1, ..., 32, zugeführt wird. Aus den Ausgängen der Multiplexer 98(j) werden in einem Registerblock 100(k), k=1, ..., 16, der aus 16 32:1-Multiplexern besteht, mit Hilfe von 16 Endliche-Zustandsautomaten 102 (k), k=1, ...16, je ein Bypass-Bit für die jeweilige Ausgangsleitung in dem Ausgangsleitungsblock 104 ausgewählt. Wenn die 2:1-Multiplexer 98(j) nicht von dem 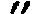 Bypass-Enable-Bit" beaufschlagt sind, werden die von der Vermittlungs-Einheit SU vermittelten Bits über die Register 100(k) an den Ausgangsleitungsblock 104 weitergegeben und stehen dann als Ausgangssignale PCM OL0 bis PCMOL15 zur Verfügung.

Aus der vorhergehenden Beschreibung geht hervor, daß ein BISON-Baustein nach dem Ausführungsbeispiel 16 Eingangsleitungen aufweist und die zu übertragenden Daten auf 16 Ausgangsleitungen vermittelt werden können. Wenn mehr Eingangs- und Ausgangsleitungen und/oder ein größerer Durchsatz angestrebt wird, können mehrere BISON-Bausteine zu einem virtuellen BISON-Baustein zusammengeschlossen werden.

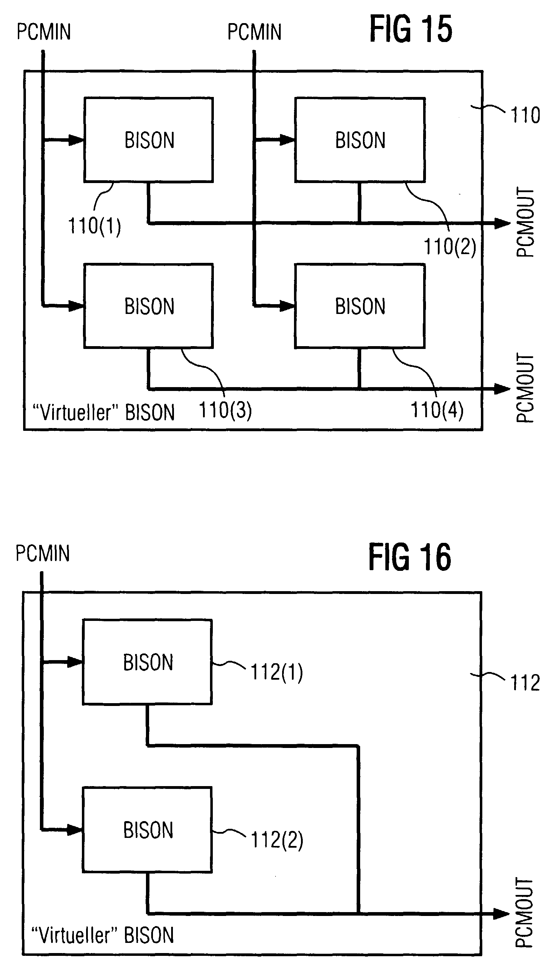

In Figur 15 ist ein Beispiel für einen virtuellen BISON-Baustein 110 gezeigt, der mehr Eingangs- und Ausgangsleitungen und auch einen erhöhten Durchsatz aufweist. Der virtuelle BISON-Baustein 110 hat ein Feld von 32 Eingangs- und Ausgangsleitungen PCM IN und PCM OUT. Der Durchsatz pro 16 Ausgangsleitungen hat sich verdoppelt, weil zwei einzelne BISON-Bausteine statt einem einzelnen BISON-Baustein 16 Ausgangsleitungen mit Daten versorgen. Die Verbindung von zwei oder mehreren BISON-Bausteinen mit denselben Ausgangsleistungen wird durch Ausgänge ermöglicht, die einen Tristate-Zustand zulassen. Jeder Ausgang hat seine eigene dedizierte Periode, um Daten an die Ausgangsleitungen zu senden. Die vier BISON-Bausteine 110(1) bis 110(4) des virtuellen BISON-Bausteins 110 sind wie folgt geschaltet. Die Eingänge PCM IN sind auf die Eingänge der BISON-Bausteine 110(1) und 110(3) geführt, während die Eingänge PCM IN auf die Eingänge des BISON-Bausteins 110(2) und 110(4) geführt sind. Die Ausgänge der BISON-Bausteine 110(1) und 110(2) sind auf die Ausgänge PCM OUT geführt, während die Ausgänge der BISON-Bausteine 110(3) und 110(4) auf die Ausgänge PCM OUT geführt sind.

Figur 16 zeigt ein Beispiel, bei dem ein virtuellen BISON-Baustein 112 aus zwei einzelnen BISON-Bausteinen 112(1) und 112(2) aufgebaut ist. Der virtuelle BISON-Baustein 112 hat 16 Eingangs- und Ausgangsleitungen. Der Durchsatz pro 16 Ausgangsleitungen wird verdoppelt, weil zwei BISON-Bausteine 16 Ausgangsleitungen mit Daten versorgen. Die Eingangsleitungen PCM IN sind mit den Eingängen der BISON-Bausteine 112(1) und 112(2) verbunden. Die Ausgänge der beiden BISON-Bausteine 112(1) und 112(2) sind auf die Ausgangsleitungen PCM OUT geführt.

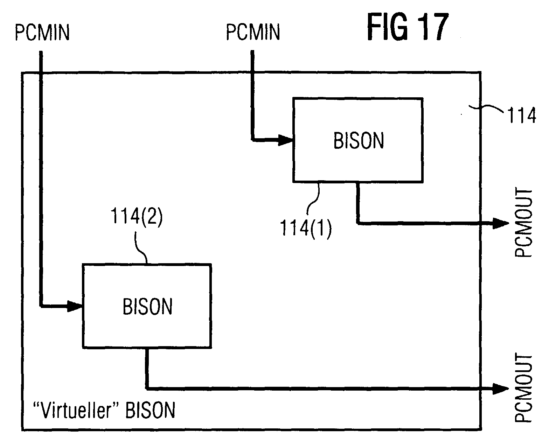

Figur 17 zeigt ein weiteres Ausführungsbeispiel für einen virtuellen BISON-Baustein 114 mit zwei einzelnen BISON-Bausteinen 114(1) und 114(2). Dieser virtuelle BISON-Baustein 114 hat 32 Eingangs- und Ausgangsleitungen. Der Durchsatz pro 16 Ausgangsleitungen wird gegenüber einem einzelnen BISON-Baustein nicht verändert, weil ein BISON-Bausteine 16 Ausgangsleitungen mit Daten versorgt. Der gesamte Durchsatz wird verdoppelt, weil der virtuelle BISON-Baustein aus zwei einzelnen BISON-Bausteinen besteht. Die Eingangsleitungen PCM IN sind auf die Eingangsleitungen des BISON-Bausteins 114(2) geführt und die Eingangsleitungen PCM IN sind auf die Eingänge des BISON-Bausteins 114(1) geführt. Die Ausgänge des BISON-Bausteins 114(1) sind auf die Ausgänge PCM OUT geführt, und die Ausgänge des BISON-Bausteins 114(2) sind auf die Ausgänge PCM OUT geführt. Bei dieser Anordnung tritt allerdings eine gewisse Einschränkung beim Vermitteln ein, weil Daten beispielsweise nicht von der Eingangsleitung PCM IN (7) auf der Ausgangsleitung PCM OUT (19) vermittelt werden. Wenn dies gewünscht wird, sollte das Ausführungsbeispiel gemäß Figur 15 eingesetzt werden.

## Patentansprüche

1. Verfahren zum Vermitteln von rahmenorientierten seriellen Daten, bei dem
- zumindest ein erster Teil der Daten über eine Schnittstelle (PI) in einen Eingangs-RAM (IR) eingelesen werden,
- die Daten von dem Eingangs-RAM (IR) in eine Vermittlungs-Einheit (SU) eingelesen werden,
- der Lese/Schreibbetrieb des Eingangs-RAMs (IR) von einem zentralen Controller (CC) gesteuert wird,
- der zentrale Controller (CC) mit Hilfe eines Vermittlungsalgorithmus Vermittlungs-Informationen erzeugt, wobei die Vermittlungs-Informationen bitweise auf die Daten bezogen sind und Adressen von Ausgangsleitungen der Schnittstelle (PI) umfassen,
- die Vermittlungs-Einheit (SU) durch ein Steuersignal und die Vermittlungs-Informationen vom zentralen Controller (CC) gesteuert wird,
- die Vermittlungs-Einheit (SU) die Daten entsprechend der Vermittlungs-Informationen auf die Ausgangsleistungen bitweise vermittelt, und
- die Daten über die Schnittstelle (PI) ausgegeben werden.

2. Verfahren nach Anspruch 1, bei dem
die Vermittlungs-Informationen zusätzlich zu den Adressen der Ausgangsleitungen auch die bitbezogene zeitliche Reihenfolge der Ausgabe der Daten umfaßt.

3. Verfahren nach Anspruch 1 oder 2, bei dem
der Vermittlungsalgorithmus in einem Vermittlungs-RAM (SR) gespeichert ist.

4. Verfahren nach einem der vorherigen Ansprüche, bei dem
ein Auslesen der Vermittlungs-Informationen, ein Auslesen der Daten aus dem Eingangs-RAM (IR) und ein Vermitteln der Daten in der Vermittlungs-Einheit (SU) im Parallelbetrieb erfolgt.

5. Verfahren nach einem der vorherigen Ansprüche, bei dem
ein zweiter Teil der Daten unter Steuerung des zentralen Controllers (CC) über einen Bypass-Datenpfad in der Schnittstelle (PI) von dem Eingang der Schnittstelle (PI) direkt auf die Ausgangsleitungen geführt werden.

6. Verfahren nach Anspruch 5, bei dem
einzelne oder mehrere zusammenhängende Bits des zweiten Teils der Daten von einem Bereich am Ende eines empfangenen Rahmens auf einen Bereich am Anfang eines abzugebenen Rahmens vermittelt werden.

7. Verfahren nach einem der vorherigen Ansprüch, bei dem
die Schnittstelle (PI) eine PCM-Schnittstelle ist und die rahmenorientierten seriellen Daten in PCM-Rahmen übertragen werden.

8. Verfahren nach einem der Ansprüche 3 bis 7, bei dem
die Daten von der Schnittstelle (PI) in einen Hintergrundbereich des Eingangs-RAMs (IR) eingelesen werden, während die Daten von einem Vordergrundbereich des Eingangs-RAMs (IR) in die Vermittlungs-Einheit (SU) ausgelesen werden, und die Vordergrund- und Hintergrundbereiche nach Verarbeitung eines Rahmens vertauscht werden.

9. Verfahren nach einem der vorhergehenden Ansprüche, bei dem
die von der Vermittlungs-Einheit (SU) vermittelten Daten in einen Hintergrundbereich eines Ausgaberegisters eingelesen werden, während die Daten aus dem Vordergrundbereich an die Ausgangsleitungen ausgegeben werden.

10. Verfahren nach einem der vorherigen Ansprüche, bei dem
in der Vermittlungs-Einheit (SU) wenigstens zwei Bits parallel vermittelt und abgespeichert werden.

11. Verfahren nach einem der Ansprüche 3 bis 10, bei dem
durch einen Adress-Abbildungsalgorithmus über eine Lesetabelle (68) aus einer Nummer der Ausgangsleitung eine Startadresse erzeugt wird,
aus einer OFFSET-Adresse über einen Steuerdatensatz (69), durch den unterschiedliche Datenraten berücksichtigt werden, ein Zwischendatensatz (70) erzeugt wird,
der Zwischendatensatz und die Startadresse miteinander verknüpft und die anfänglichen Bits des durch die Verknüpfung erzeugten Datensatzes (73) derart vertauscht werden, daß die Vermittlungs-Information für die Bits einer Ausgangsleitung auf nicht zusammenhängende Zellen des Vermittlungs-RAMs (SR) verteilt werden, so daß bei quasisequenzieller Abarbeitung des Vermittlungs-RAMs (SR) die Bits in der Reihenfolge aus dem Eingangs-RAM (IR) ausgelesen werden, wie sie zeitlich für jede Ausgangsleitung benötigt werden.

12. Verfahren nach Anspruch 11, bei dem
die Verknüpfung des Zwischendatensatzes und der Startadresse additiv ist.

13. Verfahren nach Anspruch 11, bei dem
die quasisequenzielle Abarbeitung nacheinander äquidistante Zellen des Vermittlungs-RAMs (SR) ausliest.

14. Verfahren nach Anspruch 11, bei dem
eine Auswahl der zu verarbeitenden Datenrate im Rahmen des Vermittlungsalgorithmus durchgeführt wird, wobei eine gleiche Datenrate auf allen Ausgangsleitungen oder unterschiedliche Datenraten auf einzelnen oder Gruppen von Ausgangsleitungen konfiguriert werden.

15. Einrichtung zum Vermitteln von rahmenorientierten seriellen Daten,
- mit einer PCM-Schnittstelle (PI), über die zumindest ein erster Teil der Daten in einen Eingangs-RAM (IR) eingelesen und über die die Daten auf Ausgangsleitungen ausgegeben werden,
- mit einer Vermittlungs-Einheit (SU), in die die Daten vom Eingangs-RAM (IR) eingelesen, bitweise vermittelt und zu den Ausgangsleistungen ausgegeben werden,
- mit einem zentralen Controller (CC), der mit Hilfe eines Vermittlungsalgorithmus Vermittlungs-Informationen erzeugte, wobei die Vermittlungs-Informationen bitweise auf die Daten bezogen sind und Adressen der Ausgangsleitungen umfassen, und den Lese/Schreibbetrieb des Eingangs-RAMs (IR) sowie durch eine Steuersignal und die Vermittlungs-Informationen die Vermittlungs-Einheit (SU) steuert.

16. Einrichtung nach Anspruch 15,
mit einem Vermittlungs-RAM (SR) zum Speichern des Adress-Abbildungsalgorithmus, wobei das Auslesen der Vermittlungs-Information aus dem Vermittlungs-RAM (SR), das Auslesen der Daten aus dem Eingangs-RAM (IR) und das Vermitteln der Daten in der Vermittlungs-Einheit (SU) im Parallelbetrieb erfolgt.

17. Einrichtung nach Anspruch 15 oder 16,
mit einem Bypass-Datenpfad in der PCM-Schnittstelle (PI), der ein Bypass-Register (80) umfaßt, in das die Bypass-Bits unter Steuerung des zentralen Controllers (CC) aus einem Eingangs-Register (IR) der PCM-Schnittstelle eingelesen werden.

18. Einrichtung nach Anspruch 17,
mit einem dem Bypass-Register (80) nachgeschalten Multiplexer (96), durch den unter Steuerung des zentralen Controllers (CC) die Daten des Bypass-Datenpfades und die Daten des ersten Teils der Daten auf die Ausgangsleitungen abgegeben werden.

19. Vermittlungs-Einrichtung
mit zwei oder vier Einrichtungen nach einem der Ansprüche 15 bis 18, die zum Vermitteln von rahmenorientierten seriellen Daten zusammengeschaltet sind.
